# EUROPÄISCHE PATENTANMELDUNG

(11) **EP 2 573 289 A2**
(43) Veröffentlichungstag der Anmeldung: **27.03.2013**
(21) Anmeldenummer: 12182974.1
(22) Anmeldetag: 04.09.2012
(51) Int. Cl.: E04B 1/94

(54) **Hilfsmittel zur Applikation von aufschäumenden Materialien**

(30) Priorität: 21.09.2011 DE 102011083084
(71) Anmelder: HILTI Aktiengesellschaft, 9494 Schaan (LI)
(72) Erfinder: Münzenberger, Herbert, 65191 Wiesbaden (DE)

(57) **Zusammenfassung**

Es wird ein Hilfsmittel zur Applikation von aufschäumenden Materialien in eine Bauteilöffnung beschrieben, mit einem das aufschäumende Material aufnehmenden Körper, der aus einem verformbaren Material besteht, und gegebenenfalls mit einer Einfüllöffnung für das aufschäumende Material, wobei das verformbare Material derart verformbar ist, dass es das Aufschäumen der aufschäumenden Materialien nicht behindert aber das Aufschäumvolumen und die Aufschäumrichtung begrenzt. Hierdurch kann in einfacher Weise ein Spalt zwischen einer Bauteilöffnung und einer Brandschutzabschottung feuer- und rauchgasdicht verschlossen werden.

## Beschreibung

Die Erfindung betrifft ein Hilfsmittel zur Applikation von aufschäumenden Materialien in eine Bauteilöffnung mit einem Körper, der aus einem verformbaren Material besteht, und gegebenenfalls einer Einfüllöffnung für das aufschäumende Material.

Bei Umbauarbeiten an öffentlichen Gebäuden besteht oftmals die Notwendigkeit, nachträglich Leitungen oder Rohre durch ein Bauteil, beispielsweise eine Wand, zu führen. Der geschaffene Durchbruch muss anschließend wieder verschlossen werden. Ist eine feuer- und rauchgasdichte Abschottung erforderlich, wird der Durchbruch mit Brandschutzmaterialien, wie Brandschutzsteinen, Kissen, die mit intumeszierenden Materialien gefüllt sind, oder mit Brandschutzzement, verschlossen. Wegen ihrer einfachen Installation haben sich die Brandschutzsteine zum Abschotten von Bauteildurchbrüchen, insbesondere von großen Durchbrüchen durchgesetzt. Derartige ziegelmauerförmige Brandschutzsteine sind nach der DE 199 14 371 C1 vorbekannt. Es handelt sich dabei um intumeszenzfähige Brandschutzmauersteine, welche lose, ziegelmauerförmig in einem Bauteildurchbruch sowie üblicherweise um eine hindurchführende Leitung herum angeordnet sind und die im Brandfall stark expandieren und die Öffnung feuer- und rauchdicht verschliessen.

Problematisch ist hierbei allerdings der Abschluss der Abschottung mit der letzten Brandschutzsteinreihe. Die Brandschutzsteine sollen komprimiert eingebaut werden, um die Feuer- und Rauchgasdichtigkeit sicherzustellen und die Brandschutzsteine vor dem unbeabsichtigten Herausfallen zu sichern. Aufgrund ihrer Beschaffenheit, insbesondere der Beschaffenheit ihrer Oberfläche, die oft klebrig und wenig rutschig ist, und ihres plastoelastischen Verhaltens lassen sich die Steine nur sehr schwer in den verbleibenden Spalt pressen, der kleiner als der Brandschutzstein hoch ist.

Dieses Problem kann durch einen Vakuumstein gelöst werden. Ein Brandschutzstein, der aus einem geschäumten Material besteht und Poren aufweist, lässt sich komprimieren, in dem er in eine Folie verpackt wird und an die Folie ein Vakuum angelegt wird. Dadurch hat der Stein nur noch etwa 1/3 seiner Ausgangshöhe bzw. -volumens und lässt sich einfach in den verbleibenden Spalt der abzuschottenden Bauteilöffnung legen. Wird die Vakuumverpackung angestochen oder angeritzt, expandiert der Stein, um sein Ausgangsvolumen wieder zu erlangen, wodurch das gesamte Schott verpresst wird.

Nachteilig an dieser Lösung ist, dass die vakuumverpackten und komprimierten Brandschutzsteine häufig ihr Rückstellvermögen verlieren, insbesondere bei längerer Lagerung. Daher dehnen sich diese Steine nicht mehr oder nur noch ungenügend aus und können demzufolge das Schott nicht mehr oder nicht mehr ausreichend verpressen, so dass keine Feuer- und Rauchgasdichtigkeit mehr gegeben ist.

Eine weitere Lösung zum Verschließen des Spalts zwischen der Bauteilöffnung und dem Schott und zum Abdichten des Schotts besteht darin, den Spalt mit einem expandierenden Brandschutzschaum abzudichten.

Nachteilig an dieser Lösung ist, dass der Brandschutzschaum nicht immer leicht zu applizieren ist und nur einen geringen Druck auf die unteren Lagen der Brandschutzsteine ausübt. Problematisch bei aufschäumenden Materialien ist nämlich, dass sich der bildende Schaum in Richtung des geringsten Widerstands ausdehnt. Im Falle des Abdichtens eines Spalts zwischen der Bauteilöffnung und der letzen Steinreihe einer Abschottung bedeutet dies, dass sich der bildende Schaum hauptsächlich nach vorne aus der Bauteilöffnung heraus und nach hinten in die entgegensetzte Richtung, in die Bauteilöffnung hinein, ausdehnt. Demzufolge weicht der Expansionsdruck aus, so dass der Expansionsdruck, der erforderlich wäre, das Schott zu verpressen und entsprechend abzudichten, also gerichtet auf die Wandung der Bauteilöffnung und die Abschottung, nur noch unzureichend ist.

Der Erfindung liegt daher die Aufgabe zugrunde, ein Hilfsmittel zur Applikation von aufschäumenden Materialien in eine Bauteilöffnung der eingangs beschriebenen Art bereitzustellen, das die genannten Nachteile vermeidet, das insbesondere einen das aufschäumende Material aufnehmenden Körper aufweist und einen einfachen feuer- und rauchgasdichten Verschluss des Spalts zwischen einem Bauteildurchbruch und einen Brandschutzschott ermöglicht.

Die Lösung der Aufgabe erfolgt dadurch, dass der das aufschäumende Material aufnehmende Körper aus einem verformbaren Material besteht, das derart verformbar ist, dass es das Aufschäumen der aufschäumenden Materialien nicht behindert aber das Aufschäumvolumen und die Aufschäumrichtung begrenzt.

Mit dem erfindungsgemäßen Hilfsmittel ist es überraschenderweise möglich, das Expansionsvolumen bzw. die Expansionsrichtung von aufschäumenden Materialien, wie Brandschutzschäumen, zu begrenzen bzw. zu richten, so dass mehr Expansionsdruck auf die Wandung der Bauteilöffnung und die letzte Steinreihe der Abschottung gerichtet werden kann.

Das aufschäumende Material ist nicht beschränkt. Zweckmäßig ist das aufschäumende Material ein Brandschutzschaum, der im Brandfalle intumesziert und dazu beiträgt, die Bauteilöffnung feuer- und rauchgasdicht zu verschliessen. Es können aber auch andere aufschäumende Materialien, welche nicht intumeszierend sind, wie herkömmliche Bauschäume zum Abdichten von Spalten und Fugen, verwendet werden.

Bevorzugt besteht der verformbare Körper aus einem flexiblen Gitternetz oder einem elastischen Beutel, wobei ein flexibles Gitternetz bevorzugt und ein flexibles Gitternetz aus Kunststoff, insbesondere eines aus thermoplastischem Kunststoff, wie beispielsweise Polyethylen, besonders bevorzugt ist.

In einer Ausführungsform des erfindungsgemäßen Hilfsmittels ist das flexible Kunststoffgitternetz ein Netzschlauch, dessen eines Ende verschlossen ist und dessen anderes Ende die Einfüllöffnung bildet. Es können auch beide Enden verschlossen sein, wobei dann eine Möglichkeit, wie etwa eine Öffnung, verbleiben oder geschaffen werden muss, damit das aufschäumende Material in den Schlauch eingebracht werden kann. Solche Öffnungen können etwa die Maschen des Netzes darstellen, durch die das aufschäumende Material eingebracht werden kann. Die Enden können etwa durch Metallclips oder durch Verschweißen verschlossen werden, wobei auch andere Verschlussarten denkbar und möglich sind. Dies hat den Vorteil, dass der Schlauch einfach vor Ort verschlossen und so die Länge des Schlauchs an die jeweiligen Gegebenheiten vor Ort angepasst werden kann. Die Einfüllöffnung muss nicht an den Enden des Gitternetzes liegen sondern kann an jeder anderen Stelle liegen.

Zweckmäßig hat das flexible Kunststoffgitternetz eine Maschenweite bis maximal 15 mm. Bei einer größeren Maschenweite tritt das aufschäumende Material durch die Maschen aus dem Kunststoffgitternetz aus, so dass das erfindungsgemäße Hilfsmittel seine Funktion, nämlich das Aufschäumen des aufschäumenden Materials zu begrenzen, nicht mehr erfüllen kann. Die Maschenweite muss jedoch mindestens so groß sein, das sich das aufschäumende Material hinreichend ausdehnen kann und in seiner Funktion, nämlich das Abdichten und das Verpressen des Brandschutzschotts gestört wird. Dementsprechend hat das flexible Kunststoffgitternetz eine Maschenweite W mit 0 < W ≤ 15 mm.

Die Maschenweite bezieht sich dabei auf das ungefüllte und damit ungedehnte flexible Kunststoffgitternetz. Sobald das aufschäumende Material in das Kunststoffgitternetz gegeben wurde, beginnt es aufzuschäumen und sich auszudehnen, was dazu führt, dass sich die Form und die Maße der Maschen des Kunststoffgitternetzes verändern.

Bevorzugt beträgt die Stärke des Materials, aus dem das flexible Kunststoffgitternetz besteht zwischen 0,2 und 3 mm, bevorzugt 0,2 bis 0,7 mm. Bei einer Materialstärke oberhalb von 3 mm wird das Kunststoffgitternetz zu starr und damit zu unflexibel, so dass eine Ausdehnung des aufschäumenden Materials behindert und gegebenenfalls ganz verhindert wird. Dies führt dazu, dass das Brandschutzschott nicht mehr hinreichend verpresst wird, was die Rauchgasdichtigkeit und die Festigkeit des Brandschutzschotts beeinträchtigt.

Die Länge und der Durchmesser des flexiblen Kunststoffgitternetzes werden in Abhängigkeit von der Breite und Größe des zu verschließenden Spalts gewählt, so dass hinreichend aufschäumendes Material in den Spalt eingebracht werden kann, um eine feuer- und rauchgasdichte Abschottung zu erreichen und um gegebenenfalls bestimmte gesetzliche oder zulassungsbedingte Anforderungen zu erfüllen.

Für ein Brandschutzschott, bei dem der Mauerdurchbruch mit Brandschutzsteinen verschlossen wird, hat sich als geeignet herausgestellt, dass das Kunststoffgitternetz etwa 30% länger als die Einbautiefe der Brandschutzsteine ist. Als Einbautiefen für derartige Brandschutzschotts hat sich in Europa für F90- bis F120-Zulassungen eine Einbautiefe von 200 mm und für eine F60-Zulassung eine Einbautiefe von 130 mm für die Brandschutzsteine als Standard etabliert. Dementsprechend wären Kunststoffgitternetze mit einer Länge von 260 mm (F90 - F120) und 170 mm (F60) zu wählen. In den USA haben sich für F180-Zulassungen 200 mm und für F120-Zulassungen 130 mm etabliert, wobei die Einbautiefe der Brandschutzsteine bei kleinen und großen Schotts etwas davon abweichen kann. Dementsprechend wären Kunststoffgitternetze mit einer Länge von 260 mm (F180) und 170 mm (F120) zu wählen. Das Kunststoffgitternetz kann vorgefertigt werden, da in den meisten Fällen die Standardeinbautiefen gewählt werden. Somit können für jede Standardeinbautiefe Kunststoffgitternetze in der entsprechenden Länge hergestellt werden. Alternativ ist es auch möglich, das Kunststoffgitternetz vor Ort auf die benötigte Länge abzulängen, etwa wenn keine Standardeinbautiefen gewählt werden, und mit Metallclips zu verschließen.

Der Schlauchdurchmesser kann in ungedehntem Zustand, d.h. vor der Befüllung mit dem aufschäumenden Material, einen Durchmesser von 6 bis 300 mm aufweisen. Bevorzugt beträgt der Schlauchdurchmesser 30 bis 60 mm. Hierdurch ergibt sich ein Schaumkörper bestehend aus dem aufschäumenden Material und dem flexiblen Kunststoffgitternetz mit einem Durchmesser von 90 bis 200 mm, sofern sich das aufschäumende Material ausschließlich in den durch das Kunststoffgitternetz gegebenen Grenzen ausdehnen kann. Das Expansionsvolumen hängt bei der Verwendung in einem Brandschutzschott jedoch von der Größe des zu verschließenden Spaltes und dem Gegendruck durch die Brandschutzsteine ab.

In einer alternativen Ausführungsform des erfindungsgemäßen Hilfsmittels ist der elastische Beutel ein Schlauch, dessen eines Ende verschlossen ist und dessen anderes Ende die Einfüllöffnung bildet. Zweckmäßig ist nur ein Ende verschlossen, da ansonsten eine weitere Öffnung geschaffen werden muss, um das aufschäumende Material einzubringen. Auch hier liegt ein Vorteil darin, dass die Länge des Schlauchs vor Ort an die jeweiligen Gegebenheiten angepasst werden kann.

Auch die Größe des Beutels wird in Abhängigkeit von der Breite und Größe des zu verschließenden Spalts gewählt, so dass hinreichend aufschäumendes Material in den Spalt eingebracht werden kann, um eine feuer- und rauchgasdichte Abschottung zu erreichen und um gegebenenfalls bestimmte gesetzliche oder zulassungsbedingte Anforderungen zu erfüllen.

Bevorzugt ist die Einfüllöffnung eine Tülle oder ein Schlauch durch die das aufschäumende Material einfach in den Körper des erfindungsgemäßen Hilfsmittels eingebracht werden kann. Die Tülle oder der Schlauch kann einstückig mit dem Körper ausgebildet sein, oder als Zusatzteil integriert werden.

Die Erfindung wird anhand des nachfolgenden Beispiels näher erläutert:

Ein Bauteildurchbruch durch den nachträglich Leitungen geführt wurden, wird mit Brandschutzmauersteinen abgeschottet. Die Brandschutzsteine der Größe 200x130x5 mm (LxBxH) werden längs in den Bauteildurchbruch eingebaut. Um einen verbleibenden Spalt von 20 bis 30 mm zwischen der letzten Steinreihe und der Wandung des Bauteildurchbruchs feuer- und rauchgasdicht zu verschließen, wird zunächst mit etwas Abstand von der Seitenwand des Bauteildurchbruchs in eine Ecke des Schotts als vorbereitetes Hilfsmittel ein beidseitig verschweißter, flexibler Polyethylen-Gitternetzschlauch mit einem Durchmesser von 30 mm, einer Länge von 270 mm, einer Maschenweite von 15 mm und einer Materialstärke von 0,2 bis 0,7 mm eingeschoben. Dabei wird der Gitternetzschlauch so in den zu verschließenden Spalt geschoben, dass dieser nicht mit der Bauteilfront abschließt sondern sich weiter innerhalb des Spalts befindet, so dass nach erfolgter Expansion des Brandschutzschaums nicht zu viel Schaum aus dem Spalt nach vorne herausquillt.

Der Gitternetzschlauch wird über eine Masche mit einer aufschäumenden Brandschutzmasse, wie etwa Hilti® CP620 Brandschutzschaum, gefüllt. Anschließend wird gewartet, bis sich der Schaum ausgedehnt hat. Dadurch nimmt der Umfang des Gitternetzschlauchs zu und die Länge ab, wobei der Expansionsdruck durch den Gitternetzschlauch hauptsächlich radial nach außen und somit gegen die Brandschutzmauersteinreihe und die Wandungen des Bauteildurchbruchs gerichtet ist.

Danach wird mit etwas Abstand ein weiterer Gitternetzschlauch in den Spalt gelegt und ebenfalls mit Brandschutzschaum oder -masse befüllt. Dieser Schritt wird wiederholt, bis der gesamt Spalt abgeschottet ist.

Durch den Expansionsdruck der aufschäumenden Masse wird der Spalt feuer- und rauchgasdicht verschlossen und das Schott verpresst, wobei aufgrund der Gitternetzschlauchs die Expansion des Brandschutzschaums in Richtung der Spaltöffnung und in das Innere des Spalts eingeschränkt ist.

Der Brandschutzschaum tritt teilweise durch die Maschen des Netzschlauchs, wobei dies für die Funktion des Netzschlauchs nicht hinderlich ist. Erhärtete Masse, die aus dem Spalt herausgequollen ist, kann einfach mit einem Messer nachbearbeitet und an die Oberfläche des Schotts und des Bauteils angeglichen werden.

## Patentansprüche

1. Hilfsmittel zur Applikation von aufschäumenden Materialien in eine Bauteilöffnung mit einem das aufschäumende Material aufnehmenden Körper, der aus einem verformbaren Material besteht, und gegebenenfalls mit einer Einfüllöffnung für das aufschäumende Material, wobei das verformbare Material derart verformbar ist, dass es das Aufschäumen der aufschäumenden Materialien nicht behindert aber das Aufschäumvolumen und die Aufschäumrichtung begrenzt.

2. Hilfsmittel nach Anspruch 1, wobei der verformbare Körper aus einem flexiblen Gitternetz oder einem elastischen Beutel besteht.

3. Hilfsmittel nach Anspruch 2, wobei das flexible Gitternetz aus Kunststoff besteht.

4. Hilfsmittel nach Anspruch 3, wobei das flexible Kunststoffgitternetz ein Schlauch ist, dessen eines Ende verschlossen ist und dessen anderes Ende die Einfüllöffnung bildet.

5. Hilfsmittel nach Anspruch 2, wobei der elastische Beutel aus einem geschlossenen Schlauch besteht, dessen eines Ende verschlossen ist und dessen anderes Ende die Einfüllöffnung bildet.

6. Hilfsmittel nach Anspruch 3 oder 4, wobei das flexible Kunststoffgitternetz eine Maschenweite W mit 0 < W ≤ 15 mm hat.

7. Hilfsmittel nach einem der Ansprüche 3, 4 oder 6, wobei das flexible Kunststoffgitternetz eine Materialstärke von 0,2 bis 3 mm hat.

8. Hilfsmittel nach einem der Ansprüche 4, 6 oder 7, wobei das flexible Kunststoffgitternetz einen Durchmesser von 6 bis 300 mm.

9. Hilfsmittel nach einem der Ansprüche 4 oder 6 bis 8, wobei die Länge des flexiblen Kunststoffgitternetzschlauchs von der Einbautiefe des Brandschutzschotts abhängt, wobei die Länge 30% länger ist als die Einbautiefe.

10. Hilfsmittel nach einem der vorhergehenden Ansprüche, wobei die Einfüllöffnung eine Tülle oder ein Schlauch ist.

11. Hilfsmittel nach Anspruch 10, **dadurch gekennzeichnet, dass** die Tülle oder der Schlauch einstückig mit dem Körper ausgebildet ist.
